# EUROPÄISCHE PATENTSCHRIFT

(11) **EP 1 812 192 B1**
(45) Veröffentlichungstag und Bekanntmachung des Hinweises auf die Patenterteilung: **05.03.2008**
(21) Anmeldenummer: 05810708.7
(22) Anmeldetag: 09.11.2005
(51) Int. Cl.: B23K 9/032, B23K 26/30, B21C 37/12

(54) **SCHWEISSSTAND UND VERFAHREN ZUM SCHWEISSEN EINES SPIRALROHRES**
WELDING STAND AND METHOD FOR WELDING A SPIRAL TUBE
POSTE DE SOUDURE ET PROCEDE POUR SOUDER UN TUBE SPIRALE

(30) Priorität: 19.11.2004 DE 102004055990; 01.12.2004 DE 102004058092
(43) Veröffentlichungstag der Anmeldung: 01.08.2007
(73) Patentinhaber: W+K Industrie Technik GmbH & Co. KG, 44225 Dortmund (DE)
(72) Erfinder: ORTH, Dietmar, 44265 Dortmund (DE)
(74) Vertreter: Gesthuysen, von Rohr & Eggert
(86) Internationale Anmeldenummer: PCT/EP2005/011977
(87) Internationale Veröffentlichungsnummer: WO 2006/053659

(56) Entgegenhaltungen:
- US-A- 1 915 029
- US-A- 3 030 488
- PATENT ABSTRACTS OF JAPAN Bd. 007, Nr. 230 (M-249), 12. Oktober 1983 (1983-10-12) & JP 58 122200 A (SHIN NIPPON SEITETSU KK), 20. Juli 1983 (1983-07-20)
- PATENT ABSTRACTS OF JAPAN Bd. 1995, Nr. 02, 31. März 1995 (1995-03-31) & JP 06 320267 A (KAWASAKI STEEL CORP), 22. November 1994 (1994-11-22)

## Beschreibung

Die Erfindung betrifft einen Schweißstand, insbesondere einen Fertigschweißstand, nach dem Oberbegriff von Anspruch 1. Zudem betrifft die Erfindung ein Verfahren zum Schweißen eines Spiralrohres nach dem Oberbegriff von Anspruch 7.

Ein Schweißstand mit den Oberbegriffsmerkmalen von Anspruch 1 und ein Verfahren mit den Oberbegriffsmerkmalen von Anspruch 8 ist aus Patent Abstracts of Japan, Bd. 007, Nr. 230 (M-249), 12. Oktober 1983 (1983-10-12) & JP 58 12 22 00 A (Shin Nippon Seitetsu KK), 20. Juli 1983 (1983-07-20) bekannt. Der aus dem Stand der Technik bekannte Schweißstand und das bekannte Verfahren zum Schweißen eines Spiralrohres weisen den Nachteil auf, daß es beim Vorschub des Rohres zu Erschütterungen des Rohres kommt, die zu Fehlern in der geschweißten Spiralnaht bzw. der Schweißnaht führen können. Darüber hinaus kann es zu einer Beschädigung der Transportrollen kommen, wenn diese unmittelbar mit der heißen Schweißnaht in Berührung kommen. Dies führt zu einem erhöhten Aufwand für Wartung und Instandhaltung. Ein ähnlicher Schweißstand und ein ähnliches Verfahren wird in Patent Abstracts of Japan, Bd. 1995, Nr. 02, 31. März 1995 (X995-03-31) & JP 06 32 02 67 A (Kawasaki Steel Corp), 22. November 1994 (1994-11-22) beschrieben.

Für den Transport von Wasser, Öl und Gas werden unterpulver-geschweißte Spiralrohre mit großem Durchmesser eingesetzt, welche vorzugsweise aus Warmbreitband (Coils) oder aus Stahlblech hergestellt werden können. In einer Spiralrohrform- und Heftschweißmaschine werden die Spiralrohre geformt und mit einer relativ hohen Geschwindigkeit vorzugsweise durch CO₂-Schweißung geschweißt. Anschließend werden diese Rohre auf bestimmte Rohrlängen getrennt. Das Unterpulver-Fertigschweißen erfolgt auf einzelnen Unterpulver-Fertigschweißständen, wobei die aus dem Stand der Technik bekannten Fertigschweißstände einen angetriebenen Spiralrollgang aufweisen können, der das Rohr in eine schraubenlinienförmige Bewegung entsprechend der Schweißnahtfuge versetzt.

Zum Verschweißen wird das Rohr zunächst über einen Innenschweißarm gefahren, der an seinem vorderen Ende eine Mehrzahl von Schweißköpfen und eine Einrichtung zur Zu- und Abfuhr von Schweißpulver aufweist. Nachdem das Rohr komplett über den Innenschweißarm gefahren und zum Schweißen positioniert worden ist, kann der Schweißvorgang der Innennaht beginnen. Nach einer halben Rohrumdrehung kann mit der Unterpulver-Schweißung der Außennaht begonnen werden.

An der Stelle eines Spiralrollganges kann der Transport des Rohres auch über einen sogenannten Orthogonalrollgang erfolgen. In diesem Fall werden die Rohre über spezielle Antriebseinheiten, die von oben auf das Rohr wirken, schraubenlinienförmig bewegt.

Von Nachteil ist, daß es beim Vorschub des Rohres sowohl beim Orthogonalrollgang als auch beim Spiralrollgang zu Erschütterungen des Rohres kommt, die zu Fehlern in der geschweißten Spiralnaht bzw. der Schweißnaht führen können. Die Wartung und die Instandhaltung von Spiral- und Orthogonalrollgängen ist zudem mit hohen Kosten verbunden. Schweißstände, bei denen das Spiralrohr mittels Spiralrollgang oder Orthogonalrollgang transportiert wird, weisen darüber hinaus hohe Herstellungskosten auf.

Aufgabe der vorliegenden Erfindung ist es, einen Schweißstand und ein Verfahren jeweils der eingangs genannten Art zur Verfügung zu stellen, mit dem Spiralrohre verschweißt werden können, ohne daß es zu Fehlstellen im Gefüge der geschweißten Spiralnaht kommt. Eine weitere Aufgabe der Erfindung ist es, die Kosten der Spiralrohrherstellung zu senken.

Die vorgenannten Aufgaben sind bei einem Schweißstand der eingangs genannten Art durch die Merkmale von Anspruch 1 gelöst. Verfahrensgemäß sind dementsprechend zur Lösung der vorgenannten Aufgaben die Merkmale von Anspruch 7 vorgesehen. Im Ergebnis ist es zur Erzeugung einer schraubenlinienförmig verlaufenden Bewegung des Spiralrohres relativ zur Schweißeinrichtung lediglich notwendig, das Spiralrohr zu drehen, wobei die Bewegungskomponente in Vortriebs- bzw. Längsrichtung des Rohres durch Verfahren des Rohrtransportwagensystems erzeugt wird. Dadurch können Erschütterungen, die beim Transport des Rohres über Spiral- oder Orthogonalrollgänge entstehen können, fast vollständig verhindert werden, was im Ergebnis zu einer höheren Güte der Spiral- bzw. Schweißnaht führt. Aufgrund geringer Herstellungs-, Wartungs- und Instandhaltungskosten des erfindungsgemäßen Schweißstandes können Spiralrohre zudem deutlich günstiger als bislang möglich hergestellt werden.

Um die Erschütterungen beim Vorschub des Rohres weiter zu verringern, ist es vorzugsweise vorgesehen, daß das Rohrtransportwagensystem wenigstens einen, vorzugsweise zwei insbesondere schienengeführte Rohrtransportwagen aufweist. Um einen Gleichlauf einer Mehrzahl von Rohrtransportwagen zu ermöglichen, ist dabei vorzugsweise eine Gleichlaufeinrichtung vorgesehen. Der Gleichlauf kann elektrisch und/oder mechanisch realisiert werden und vorzugsweise automatisch rechnergesteuert erfolgen. Darüber hinaus ist der Abstand der Rohrtransportwagen vorzugsweise in Abhängigkeit von der Rohrlänge einstellbar. Zur Schienenführung des Rohrtransportwagens kann vorgesehen sein, daß der Rohrtransportwagen auf bodenseitig vorgesehenen Schienen verfahren wird. Ebensogut ist es natürlich auch möglich, daß die Schienen über dem Rohrtransportwagen verlaufen und der Rohrtransportwagen daran aufgehängt ist.

Der Rohrtransportwagen kann eine Einlegeeinrichtung und/oder eine Auswerfeinrichtung für das Spiralrohr aufweisen, wobei die Einlegeeinrichtung zum Ablegen des Spiralrohres auf dem Rohrtransportwagensystem und die Auswerfeinrichtung zum Anheben und Auswerfen des Spiralrohres aus dem Rohrtransportwagensystem nach dem Schweißen vorgesehen ist. Zur Erzeugung einer Drehbewegung des Spiralrohres kann der Rohrtransportwagen außerdem eine Dreheinrichtung mit wenigstens einer Dreheinheit aufweisen, wobei die Fahrgeschwindigkeit des Rohrtransportwagensystems bzw. der Rohrtransportwagen und die Drehgeschwindigkeit der Dreheinrichtung synchronisiert bzw. koordiniert werden können. Durch die Vorschubbewegung des Rohrtransportwagensystems und die Drehbewegung des Spiralrohres wird dem Spiralrohr eine schraubenlinienförmige Bewegung aufgezwungen, die dem Verlauf der Schweißnahtfuge entspricht. Grundsätzlich ist es natürlich auch möglich, daß die Dreheinrichtung an einer anderen Stelle des Schweißstandes vorgesehen ist.

Um eine sichere Auflage des Spiralrohres auf dem Rohrtransportwagensystem und die Drehung des Spiralrohres in einfacher Weise zu ermöglichen, ist vorzugsweise weiter vorgesehen, daß die Dreheinrichtung zwei Dreheinheiten aufweist, wobei die Einlegeeinrichtung und/oder die Auswerfeinrichtung zwischen den Dreheinheiten angeordnet sein kann. Dies trägt im übrigen dazu bei, daß ein weitgehend erschütterungsfreies Einlegen bzw. Auswerfen des Spiralrohres in das Rohrtransportwagensystem möglich ist.

Um Erschütterungen beim Verfahren des Rohres möglichst vollständig zu vermeiden, kann weiter vorgesehen sein, daß der Rohrtransportwagen ohne transversale Relativbewegung zwischen Rohrtransportwagen und Spiralrohr verfahren wird. Das Spiralrohr ist zumindest beim Verfahren des Rohrtransportwagens ortsfest auf diesem gelagert.

Zur Lagerung bzw. zur Auflage des Spiralrohres auf dem Rohrtransportwagen und zur Drehung des Spiralrohres kann die Dreheinheit wenigstens ein Rollenpaar aufweisen, wobei vorzugsweise wenigstens eine Rolle des Rollenpaares angetrieben ist. Um eine Berührung der Rollen mit einer noch heißen Schweißnaht nach dem Verschweißen des Spiralrohres auszuschließen, können die Dreheinheiten und/oder die Drehrollen vorzugsweise unabhängig voneinander steuerbar bzw. verstellbar angeordnet sein, wobei die Drehrollen automatisch zum Spiralrohr angestellt und vor dem Passieren der Spiral- bzw. Schweißnaht zurückgezogen werden. Hierzu ist jeder Rolle des Rollenpaares und/oder jeder Dreheinheit eine Rückstelleinrichtung zugeordnet.

Um das Einlegen bzw. Auswerfen des Spiralrohres und die schraubenlinienkrmige Bewegung des Spiralrohres möglichst erschütterungsfrei sicherzustellen, ist es von Vorteil, daß dem Rohrwagenstransportsystem und/oder dem Schweißstand eine Steuereinrichtung zugeordnet ist, über die die Anordnung des oder der Rohrtransportwagen relativ zum Spiralrohr in Längsrichtung des Spiralrohres und/oder der gegenseitige Abstand von wenigstens zwei Rohrtransportwagen in Längsrichtung des Spiralrohrs in Abhängigkeit von der Rohrlänge des Spirakohres und/oder die Translationsbewegung des Rohrtransportwagensystems und/oder die Drehbewegung der Dreheinrichtung steuerbar ist. Darüber hinaus kann die Steuereinrichtung zur Steuerung der Rückstelleinrichtung vorgesehen sein. Vorzugsweise ist die Steuerung derart ausgebildet, daß die Vorschubbewegung und die Drehbewegung des Spiralrohres derart synchronisiert bzw. koordiniert werden, daß das Spiralrohr entsprechend dem theoretischen Spiralnahtverlauf relativ zu den an sich ortsfesten Schweißköpfen der Schweißeinrichtung verfahren wird.

Für einen ruhigen und erschütterungsfreien Vorschub des Spiralrohres beim Schweißen wird das Rohrtransportwagensystem vorzugsweise mit konstanter Fahrgeschwindigkeit verfahren bei einer Spiralgeschwindigkeit von 0,1 - 3,0 m/min, vorzugsweise 0,5 - 2,5 m/min. Die Spiral geschwindigkeit wird unter anderem von dem Werkstoff des Spiralrohres und der Materialstärke bestimmt. Eine Antriebseinrichtung des Rohrtransportwagensystems kann mit einer Antriebseinrichtung der Schweißeinrichtung derart gekoppelt sein, daß bei näherungsweise konstanter Fahrgeschwindigkeit des Rohrtransportwagensystems die Schweißeinrichtung und/oder die Schweißköpfe für eine Feinjustierung relativ zum Verlauf der Schweißnahtfuge in engen Grenzen verfahren werden können. Grundsätzlich kann auch vorgesehen sein, die Fahrgeschwindigkeit des Rohrtransportwagensystems bedarfsweise zu erhöhen und/oder die Drehgeschwindigkeit entsprechend anzupassen, um die gewünschte schraubenlinienförmige Bewegung des Spiralrohres sicherzustellen.

Das Spiralrohr wird vorzugsweise vor dem Auflegen auf das Rohrtransportwagensystem in einer aus dem Stand der Technik bekannten Spiralrohrform-und/oder in einer Spiralrohrheftmaschine vorgeschweißt. In dem erfindungsgemäßen Schweißstand können die vorgeschweißten Rohre anschließend fertig geschweißt werden.

Die Erfindung wird nachfolgend anhand der Zeichnung exemplarisch beschrieben, ohne die Erfindung hierdurch zu beschränken.

### Es zeigen:

- Fig. 1: einen erfindungsgemäßen Schweißstand in Querschnittsansicht,
- Fig. 2: den in Fig. 1 dargestellten Schweißstand in einer Draufsicht mit einem in Warteposition auf einem Vorlagerost liegenden Spiralrohr,
- Fig. 3: den in Fig. 1 dargestellten Schweißstand in einer Draufsicht mit einem auf ein Rohrtransportwagensystem aufgelegten Spiralrohr in Einlegestellung des Rohrtransportwagensystems,
- Fig. 4: den in Fig. 1 dargestellten Schweißstand in einer Draufsicht, wobei das Rohrtransportwagensystem in Schweißstellung zu Beginn des Schweißvorgangs dargestellt ist,
- Fig. 5: den in Fig. 1 dargestellten Schweißstand in einer Draufsicht, wobei das Rohrtransportwagensystem in einer Stellung unmittelbar nach Beendigung des Schweißvorgangs dargestellt ist,
- Fig. 6: den in Fig. 1 dargestellten Schweißstand in einer Draufsicht, wobei das Rohrtransportwagensystem in Auslegestellung dargestellt ist,
- Fig. 7: den in Fig. 1 dargestellten Schweißstand in einer Draufsicht in Auslegestellung des Rohrwagenstransportsystems, wobei das fertig geschweißte Spiralrohr auf einem Abrollrost liegend dargestellt ist,
- Fig. 8: eine Querschnittsansicht eines erfindungsgemäßen Schweißstandes mit einem eine Dreheinrichtung aufweisenden Rohrtransportwagen in einer ersten Antriebsstellung der Dreheinrichtung,
- Fig. 9: den in Fig. 8 dargestellten Schweißstand in einer zweiten Antriebsstellung der Dreheinrichtung,
- Fig. 10: eine Querschnittsansicht eines erfindungsgemäßen Rohrtransportwagens quer zur Fahrrichtung und
- Fig. 11: eine Draufsicht auf den in Fig. 10 dargestellten Rohrtransportwagen.

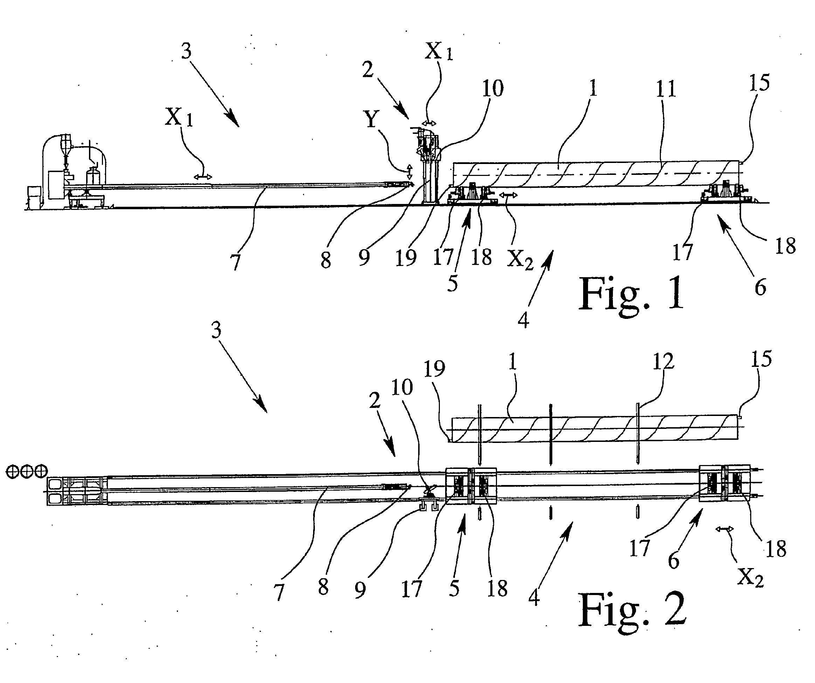

Anhand der Fig. 1 bis 7 wird nachfolgend eine Ausführungsform des erfindungsgemäßen Verfahrens zum Schweißen eines Spiralrohres 1 mittels einer Schweißeinrichtung 2 in einem Schweißstand 3 der erfindungsgemäßen Art beschrieben. Der Schweißstand 3 weist neben der Schweißeinrichtung 2 ein Rohrtransportwagensystem 4 mit zwei Rohrtransportwagen 5, 6 auf. Die Schweißeinrichtung 2 weist einen Innenschweißarm 7 mit wenigstens einem, vorzugsweise einer Mehrzahl von Innenschweißköpfen 8 auf. Darüber hinaus weist die Schweißeinrichtung 2 eine Trageinrichtung 9 mit wenigstens einem, vorzugsweise einer Mehrzahl von Außenschweißköpfen 10 auf.

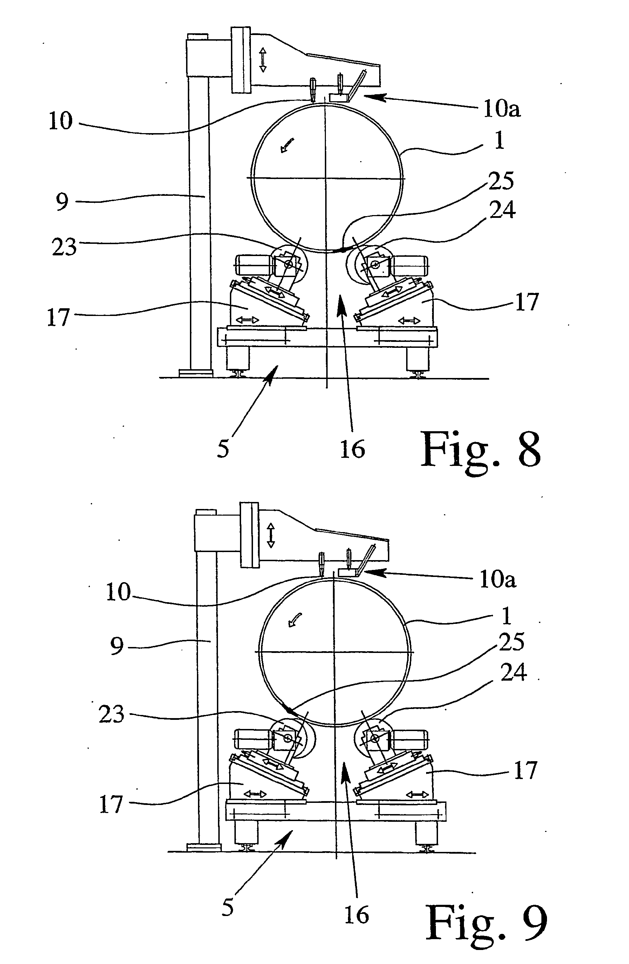

In der Fig. 1 ist weiter dargestellt, daß die Innenschweißköpfe 8 und die Außenschweißköpfe 10 über den Innenschweißarm 7 bzw. die Trageinrichtung 9 in horizontaler Richtung und in vertikaler Richtung verstellbar angeordnet sind, was durch Pfeile X₁, Y dargestellt wird. Durch die horizontale und die vertikale Verstellbarkeit der Schweißköpfe 8, 10 ist es möglich, die Schweißköpfe 8, 10 vorzugsweise über eine in Fig. 8 und in Fig. 9 dargestellte Laser-Meßeinrichtung 10a so zu positionieren und eine Feineinstellung vorzunehmen, daß die Spirale der Schweißnaht- bzw. Spiralnahtfuge 11 des Spiralrohres 1 mit konstanter, vorgewählter Schweißgeschwindigkeit mittig über die Innenschweißköpfe 8 bzw. unter den Außenscheißköpfen 10 vorbeibewegt wird. In den Fig. 8 und 9 ist die Laser-Meßeinrichtung 10a lediglich schematisch dargestellt, wobei die Laser-Meßeinrichtung 10a oberhalb des Spiralrohres 1 angeordnet ist. Grundsätzlich ist es vorzugsweise möglich, daß die Laser-Meßeinrichtung 10a zum Nachführen sowohl der Innenschweißköpfe 8 als auch der Außenschweißköpfe 10 vorgesehen und entsprechend angeordnet ist, was nachfolgend beschrieben wird. In diesem Zusammenhang können auch mehrere Laser-Meßeinrichtungen 10a zum Einsatz kommen.

Weiter ist aus Fig. 1 erkennbar, daß die Rohrtransportwagen 5, 6 in Längsrichtung des Spiralrohrs 1 zueinander verstellbar bzw. verfahrbar sind. Dadurch ist es möglich, den Abstand zwischen den Rohrtransportwagen 5, 6 in Abhängigkeit von der Rohrlänge und dem Rohrdurchmesser so festzulegen, daß es zu keiner Durchbiegung des Spiralrohres 1 kommt und das Spiralrohr 1 auf den Rohrtransportwagen 5, 6 ausreichend gelagert ist. Gemäß der in Fig. 1 dargestellten Ausführungsform ist die Verstellbarkeit des Abstandes zwischen zwei Rohrtransportwagen 5, 6 und die Verfahrbarkeit des Rohrtransportwagensystems 4 durch den Pfeil X₂ schematisch darstellt.

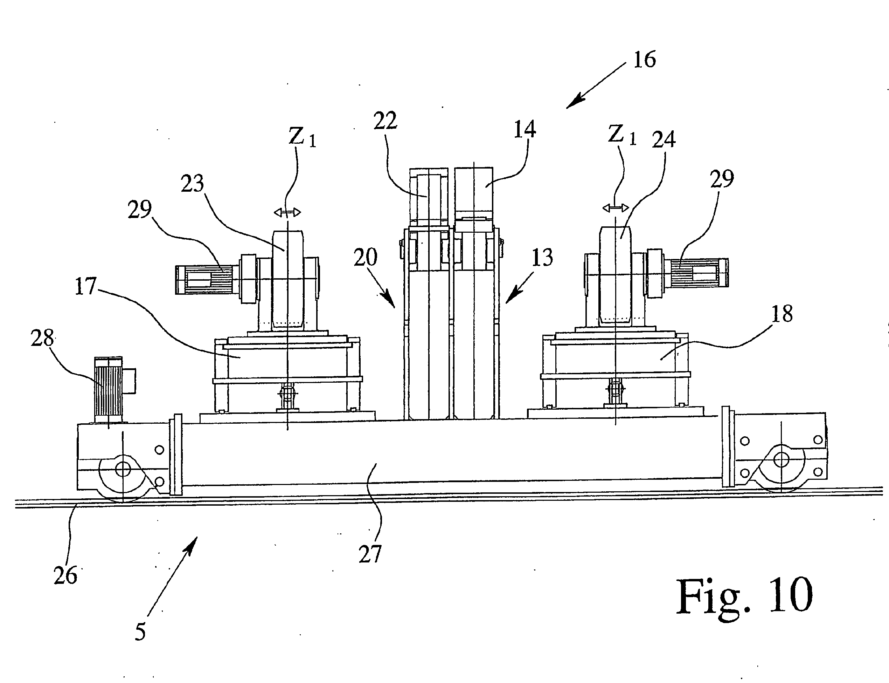

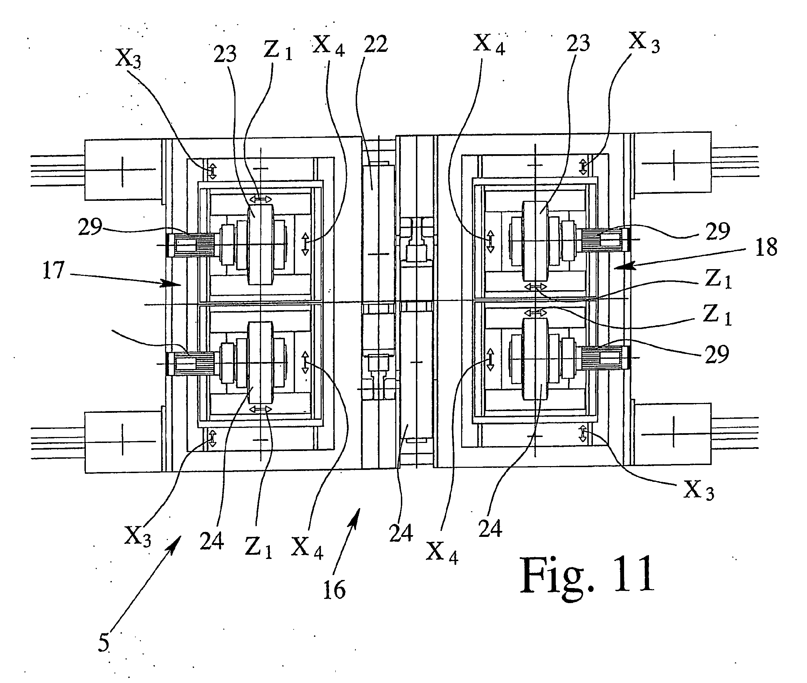

Zur Übernahme des in Warteposition auf einem Vorlagerost 12 liegenden Spiralrohres 10 auf das Rohrtransportwagensystem 4 werden die beiden Rohrtransportwagen 5, 6 mittels einer nicht im einzelnen dargestellten Sensorik automatisch so angeordnet, daß das Spiralrohr 1 mit einer in Fig. 10 und Fig. 11 dargestellten Einlegeeinrichtung 13 auf die Rohrtransportwagen 5, 6 aufgelegt werden kann. Die Einlegeeinrichtung 13 weist dazu einen verschwenkbaren Einlegearm 14 auf, der für ein erschütterungsfreies Einlegen des Spiralrohres 1 ein tragflächenförmiges Profil aufweisen kann.

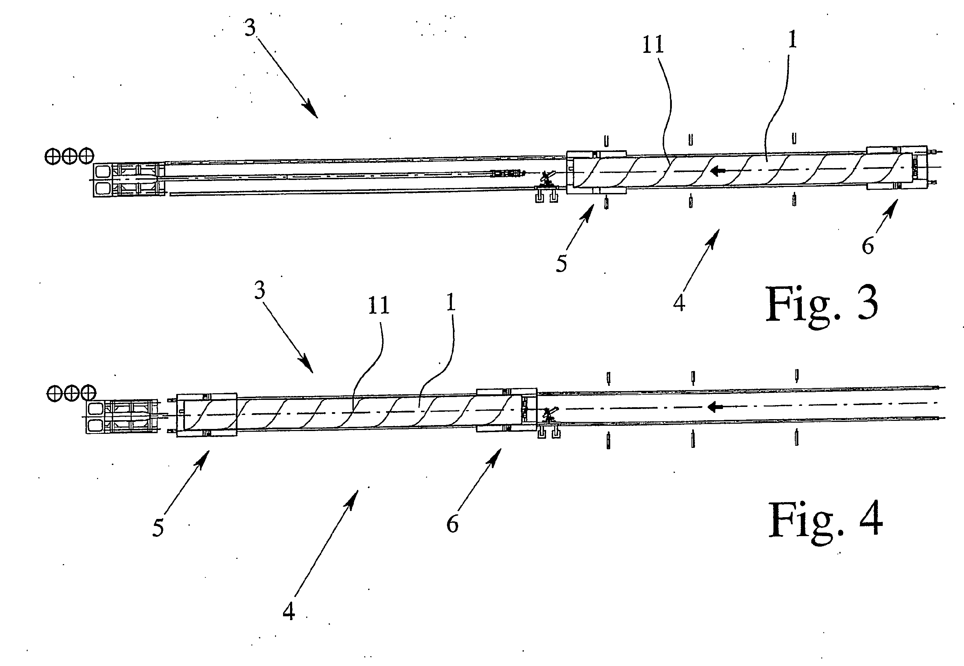

In Fig. 3 ist das Rohrtransportwagensystem 4 in einer Einlegestellung dargestellt unmittelbar nach dem Einlegen des Spiralrohrs 1 in das Rohrtransportwagensystem 4. Vor dem Beginn des Schweißens wird das Rohrtransportwagensystem 4 relativ zur Schweißeinrichtung 2 so weit verfahren, daß das Rohrtransportwagensystem 4 in einer in Fig. 4 dargestellten ersten Schweißstellung angeordnet ist. In der ersten Schweißstellung ist das Spiralrohr 1 derart über dem angehobenen Innenschweißarm 7 positioniert, daß sich die Innenschweißköpfe 8 nach dem Absenken des Innenschweißarms 7 in Rohrachsrichtung mittig über einem Schweißstartblech 15 befinden.

Zur Drehung des Spiralrohres 1 weist jeder Rohrtransportwagen 5, 6 eine in den Fig. 8 bis 11 im einzelnen dargestellte Dreheinrichtung 16 auf, wobei die Dreheinrichtung 16 vorzugsweise zwei in Längsrichtung nebeneinander angeordnete Dreheinheiten 17, 18 aufweist.

Vor dem Schweißstart wird das Spiralrohr 1 mit Hilfe der Dreheinheiten 17, 18 in die Position für den Schweißstart gedreht, wobei die Innenschweißköpfe 8 beim Schweißstart derart über dem Schweißstartblech 15 angeordnet sind, daß nach dem Schweißstart und gleichzeitigem Einsetzen der Rohrbewegung die Schweißdrähte in Mitte der Spiralnahtfuge 11 das Spiralrohr 1 erreichen. Die zum Schweißen des Spiralrohres 1 notwendige schraubenlinienförmige Bewegung des Spiralrohres 1 wird durch Verfahren des Spiralrohres 1 zusammen mit dem Rohrtransportwagensystem 4 relativ zur Schweißeinrichtung 2 und durch die über die Dreheinrichtung 16 erzeugte Drehbewegung des Spiralrohes 1 vorgegeben.

Die Fahrgeschwindigkeit der beiden Rohrtransportwagen 5, 6 und die Drehgeschwindigkeit der Dreheinheiten 17, 18 können so synchronisiert bzw. koordiniert werden, daß die Spirale der Schweißnahtfuge 11 des Spiralrohes 1 mit konstanter, zuvor festgelegter Schweißgeschwindigkeit mittig über die Innenschweißköpfe 8 bzw. unter den Außenschweil3köpfen 10 vorbeibewegt wird. Dabei ist es vorzugsweise so, daß nach dem Start der Innenschweißung nach ca. einer drittel Rohrumdrehung die Außenschweißköpfe 10 derart angeordnet sind, daß die Außenschweißung einsetzen kann, sobald das Schweißstartblech 15 unter den Außenschweißköpfen 10 angelangt ist, was nach ca. einer halben Rohrumdrehung der Fall ist. Im weiteren Verlauf erreichen die Außenschweißköpfe 10 die Mitte der Schweißnahtfuge 11 des Spiralrohres 1.

Zur vorzugsweise automatischen Anordnung der Innenschweißköpfe 8 und der Außenschweißköpfe 10 relativ zum Schweißstartblech 15 kann die Laser-Meßeinrichtung 10a vorgesehen sein. Dabei kann weiter vorgesehen sein, daß eine Laserschnittlinie auf der Schweißnahtfuge 11 erzeugt wird, die über eine Kamera aufgenommen und zur Ermittlung des Profils der Schweißnahtfuge 11 an eine Rechnereinrichtung übertragen wird. In Abhängigkeit von dem ermittelten Profil der Schweißnahtfuge 11 kann die Rechnereinrichtung Steuerkoordinaten für die Schweißköpfe 8, 10 in drei Ebenen ermitteln. Die Anordnung der Schweißköpfe 8, 10 relativ zum Schweißstartblech 15 und/oder zur Schweißnahtfuge 11 kann durch die Steuerkoordinaten automatisch festgelegt und bei Bedarf entsprechend korrigiert werden, so daß sich bei gleichbleibender Spiralbewegung des Spiralrohres 1 die Schweißköpfe 8, 10 stets oberhalb der Schweißnahtfuge 11 befinden. Die Anordnung der Schweißköpfe 8, 10 relativ zur Schweißnahtfuge 11 kann einem Bediener über eine Anzeigeeinrichtung der Laser-Meßeinrichtung 10a angezeigt werden. Die Laser-Meßeinrichtung 10a kann somit sowohl an der Innen- als auch an der Außenschweißung beteiligt sein.

Während des Schweißprozesses wird die Lage der Schweißköpfe 8, 10 zur Schweißnahtfuge 11 für die Innen- und Außenschweißung über die Laser-Meßeinrichtung 10a vorzugsweise getrennt überwacht. Abweichungen bei der Innenschweißung werden durch Verstellen des Innenschweißarms 7, bei der Außenschweißung durch Verstellen der Außenschweißköpfe 10 relativ zur Rohrachse automatisch korrigiert. Dabei können Höhenabweichungen der Schweißköpfe 8, 10 zur Rohroberfläche aufgrund von Unrundheit des Rohrkörpers, auf grund von Durchmessertoleranzen oder aufgrund der Durchbiegung des Spiralrohres 1 während des Schweißprozesses innerhalb und außerhalb des Spiralrohres 1 kontinuierlich erfaßt werden. Dazu kann die Laser-Meßeinrichtung 10a einen Höhensensor aufweisen. Bei Abweichungen von einem vorgegebenen Sollmaß können die Schweißköpfe 8, 10 automatisch in der Höhe verstellt werden.

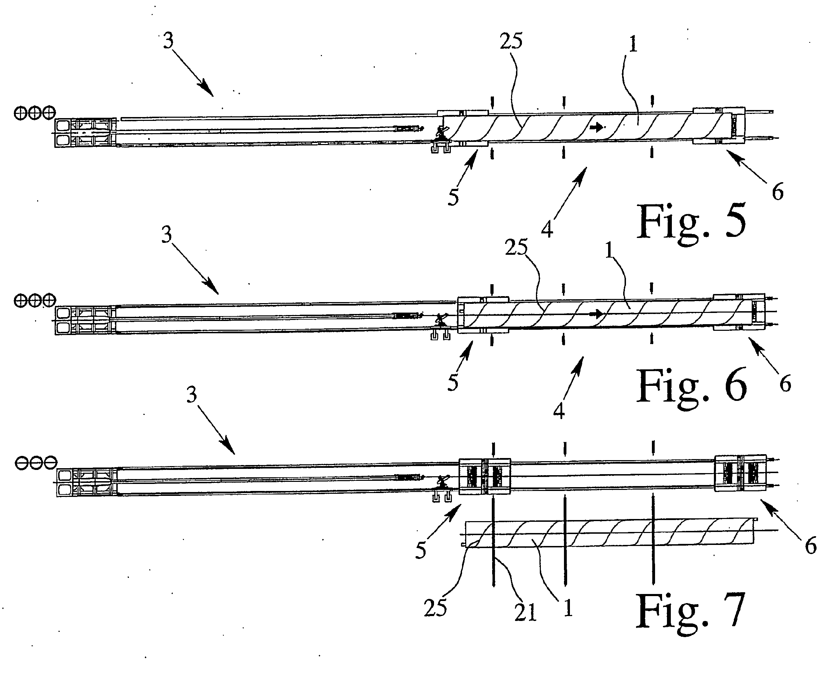

Sobald das Schweißnahtendblech 19 unter den Innenschweißköpfen 8 angelangt ist, wird die Innenschweißung automatisch gestoppt und anschließend der Innenschweißarm 7 für den Schweißprozeß des nächsten Spiralrohes 1 angehoben. Ist das Schweißnahtendblech 19 unter den Außenschweißköpfen 10 angelangt, wird die Außenschweißung automatisch beendet. Dies ist in Fig. 5 dargestellt.

Anschließend werden die Außenschweißköpfe 10 für das Schweißen des nächsten Spiralrohres 1 angehoben, die Drehbewegung des Spiralrohres 1 wird gestoppt und die Rohrtransportwagen 5, 6 fahren in die Position, in der das Spiralrohr 1 mit Hilfe einer Auswerfeinrichtung 20 auf einen Abrollrost 21 zur weiteren Bearbeitung übergeben werden kann. Die Auswerfeinrichtung 20 ist in den Fig. 10 und 11 dargestellt und kann einen Auswerfarm 22 mit einem tragflächenförmigen Profil aufweisen zum erschütterungsfreien Auswerfen.

In den Fig. 8 und 9 ist eine Querschnittsansicht des Schweißstandes 3 mit dem Rohrtransportwagen 5 dargestellt. Die Dreheinheit 17 weist ein Rollenpaar mit zwei Rollen 23, 24 zur Auflage des Spiralrohres 1 auf, wobei wenigstens eine Rolle 23, 24 des Rollenpaares angetrieben ist. Jede Rolle 23, 24 eines Rollenpaares ist einer nicht im einzelnen dargestellten Rückstelleinrichtung zugeordnet. Damit eine fertig geschweißte, teilweise mit Schlacke behaftete heiße geschweißte Spiralnaht 25 und ggf. Durchbrände von der Innenschweißung beim Überqueren der Rollen 23, 24 keine Erschütterungen des Spiralrohres 1 bewirken können und damit die Oberfläche der vorzugsweise mit Kunststoff beschichteten Rollen 23, 24 durch die heiße geschweißte Spiralnaht 25 nicht zerstört wird, ist die Rückstelleinrichtung vorzugsweise derart steuerbar, daß eine Rolle 23, 24 aus ihrer Anlagestellung automatisch zurückgezogen wird, bevor es zur Berührung mit der geschweißten Spiralnaht 25 kommt und daß die Rolle 23, 24 nach dem Passieren der geschweißten Spiralnaht 25 wieder an das Spiralrohr 1 angestellt wird. In Fig. 8 ist dargestellt, daß die Rolle 23 der Dreheinheit 17 gegen das Spiralrohr 1 angestellt ist, wobei die geschweißte Spiralnaht 25 die Drehrolle 23 bereits passiert hat. Bevor die heiße geschweißte Spiralnaht 25 bei der Drehbewegung des Spiralrohres 1 entgegen dem Uhrzeigersinn die Drehrolle 24 der Dreheinheit 17 erreicht, wird sensorgesteuert die Rolle 24 über die nicht im einzelnen dargestellte Rückstelleinrichtung zurückgezogen und nach dem Passieren der geschweißten Spiralnaht 25 automatisch wieder an das Spiralrohr 1 angestellt, was in Fig. 9 dargestellt ist. Fig, 9 zeigt dagegen die Rolle 23 bereits in einem vom Spiralrohr 1 abgestellten Zustand vor dem Passieren der geschweißten Spiralnaht 25.

In den Fig. 10 und 11 ist ein erfindungsgemäßer Rohrtransportwagen 5 dargestellt, der einen auf einem Gleis 26 geführten Grundwagen 27 aufweist. Der Transportwagen 5 wird angetrieben über einen Antrieb 28. Auf den Grundwagen 27 sind zwei Dreheinheiten 17, 1. 8 der Dreheinrichtung 16 angeordnet, wobei die Einlegeeinrichtung 13 und die Auswerfeinrichtung 20 zwischen den Dreheinheiten 17, 18 vorgesehen sein kann. Die Dreheinheiten 17, 18 weisen jeweils ein Rollenpaar mit den Rollen 23, 24 auf. Gemäß der in den Fig. 10 und 11 dargestellten Ausführungsform sind alle Rollen 23, 24 angetrieben und weisen dazu entsprechende Rollenantriebe 29 auf. Grundsätzlich ist es jedoch ausreichend, daß eine Rolle 23, 24 angetrieben ist.

Je nach Steigungswinkel der geschweißten Spiralnaht 25 können Rollenböcke der Rollen 23, 24 in Rohrachsrichtung verstellbar angeordnet sein, was in Fig. 11 durch die Pfeile Z₁ dargestellt ist. Um Spiralrohre 1 mit unterschiedlichen Rohrdurchmessern auf den Rohrtransportwagen 5 auflegen zu können, sind die Rollenböcke der Rollen 23, 24 darüber hinaus quer zur Rohrachsrichtung verstellbar, was durch die mit X₃ gekennzeichneten Pfeile in Fig. 11 schematisch dargestellt wird. Durch die Pfeile X₄ wird in den Fig. 10 und 11 schematisch die Rückstellmöglichkeit der Rollen 23, 24 dargestellt.

Durch die verstellbare Anordnung der Rollen 23, 24 und die Steuerung der Rückzieheinrichtungen wird gewährleistet, daß das Spiralohr 1 stets auf wenigstens zwei Rollen 23, 24 aufliegt, wobei die Bewegung der Rollen 23, 24 derart koordiniert ist, daß zu keinem Zeitpunkt eine Rolle 23, 24 mit der heißen geschweißten Spiralnaht 25 in Berührung kommt.

## Patentansprüche

1. Schweißstand (3) ausgebildet zum Schweißen einer Spiralnaht (25) eines Spiralrohres (1), mit einer Schweißeinrichtung (2) und mit einer Transporteinrichtung zum Transport des Spiralrohres (1) relativ zur Schweißeinrichtung, wobei die Transporteinrichtung als Rohrtransportwagensystem (4) mit wenigstens einem Rohrtransportwagen (5, 6) ausgebildet ist, das zur Schweißung mit dem auf dem Rohrtransportwagensystem (4) aufliegenden Spiralrohr (1) relativ zur Schweißeinrichtung (2) in Längsrichtung verfahrbar ist, wobei der Rohrtransportwagen (5, 6) eine Dreheinrichtung (16) mit wenigstens einer Dreheinheit (17, 18) zur Drehung des Spiralrohres (1) während des Verfahrens in Längsrichtung aufweist, wobei die Dreheinheit (17, 18) wenigstens ein Rollenpaar zur Auflage des Spiralrohres (1) aufweist und wobei wenigstens eine Rolle (23, 24) des Rollenpaares angetrieben ist, **dadurch gekennzeichnet, daß** jeder Rolle (23, 24) des Rollenpaares eine Rückstelleinrichtung zugeordnet ist und daß die Rückstelleinrichtung mittels einer Steuereinrichtung derart steuerbar ist, daß eine Rolle (23, 24) aus ihrer Anlagestellung automatisch zurückgezogen wird, bevor es zu einer Berührung mit der geschweißten Spiralnaht (25) kommt, und daß die Rolle (23, 24) nach dem Passieren der geschweißten Schweißnaht (25) wieder an das Spiralrohr (1) angestellt wird.

2. Schweißstand nach Anspruch 1, **dadurch gekennzeichnet, daß** am Rohrtransportwagen (5, 6) eine Einlegeeinrichtung (13) für das Spiralrohr (1) und/oder eine Auswerfeinrichtung (20) für das Spiralrohr (1) vorgesehen ist.

3. Schweißstand nach Anspruch 1 oder 2, **dadurch gekennzeichnet, daß** die Dreheinrichtung zwei Dreheinheiten (17, 18) zur Drehung des Spiralrohres (1) aufweist und daß, vorzugsweise, die Einlegeeinrichtung (18) und/oder die Auswerfeinrichtung (20) zwischen den Dreheinheiten (17, 18) angeordnet ist.

4. Schweißstand nach einem der vorhergehenden Ansprüche, **dadurch gekennzeichnet, daß** die Rolle (23, 24) in Längsrichtung des Spiralrohres (1) verstellbar ist.

5. Schweißstand nach Anspruch 1, **dadurch gekennzeichnet, daß** das Rohrtransportwagensystem (4) zwei Rohrtransportwagen (5, 6) aufweist und daß, vorzugsweise, dem Rohrtransportwagen (5, 6) eine Gleichlaufeinrichtung zugeordnet ist.

6. Schweißstand nach einem der vorhergehenden Ansprüche, **dadurch gekennzeichnet, daß** dem Rohrtransportwagensystem (4) eine Steuereinrichtung zugeordnet ist, über die die Anordnung des oder der Rohrtransportwagen (5, 6) relativ zum Spiralrohr (1) in Längsrichtung des Spiralrohres (1) und/oder der gegenseitige Abstand von wenigstens zwei Rohrtransportwagen (5, 6) in Längsrichtung des Spiralrohres (1) in Abhängigkeit von der Rohrlänge des Spiralrohres (1) und/oder die Translationsbewegung des Rohrtransportwagensystems (4) und/oder die Dreheinrichtung (16) steuerbar ist.

7. Verfahren zum Schweißen eines Spiralrohres (1) mittels einer Schweißeinrichtung (2), vorzugsweise in einem Schweißstand (3) nach einem der vorhergehenden Ansprüche, wobei das Spiralrohr (1) während des Schweißens schraubenlinienförmig und entlang der Schweißeinrichtung (3) bewegt wird, wobei das Spiralrohr (1) zum Schweißen auf ein Rohrtransportwagensystem (4) mit wenigstens einem Rohrtransportwagen (5, 6) aufgelegt wird und das Rohrtransportwagensystem (4) beim Schweißen zusammen mit dem Spiralrohr (1) in Längsrichtung des Spiralrohres (1) relativ zur Schweißeinrichtung (2) verfahren wird und wobei die Drehbewegung des Spiralrohres (1) über eine Dreheinrichtung (16) auf dem Rohrtransportwagen (5, 6) während des Verfahrens des Rohrtransportwagens (5, 6) erzeugt wird, **dadurch gekennzeichnet, daß** die Dreheinrichtung (16) eine Mehrzahl von Rollenpaaren aufweist und daß einzelne Rollen (23, 24) automatisch zum Spiralrohr (1) angestellt und zurückgezogen werden, damit es nicht zu einer Berührung einer Rolle (23, 24) mit der geschweißten Spiralnaht (25) kommt.

8. Verfahren nach Anspruch 7, **dadurch gekennzeichnet, daß** die Fahrgeschwindigkeit des Rohrtransportwagensystems (4) und die Drehgeschwindigkeit der Dreheinrichtung (16) derart synchronisiert werden, daß beim Schweißen die Spirale der Schweißnahtfuge (11) des Spiralrohres (1) mit vorzugsweise konstanter Geschwindigkeit in Schweißstellung relativ zu einem Schweißkopf (8, 10) der Schweißeinrichtung (2) bewegt wird.

9. Verfahren nach einem der vorhergehenden Ansprüche 7 oder 8, **dadurch gekennzeichnet, daß** der Rohrtransportwagen (5, 6) ohne transversale Relativbewegung zwischen dem Rohrtransportwagen (5, 6) und dem Spiralrohr (1) verfahren wird.

10. Verfahren nach einem der vorhergehenden Ansprüche 7 bis 9, **dadurch gekennzeichnet, daß** das Rohrtransportwagensystem (4) eine Mehrzahl von Rohrtransportwagen (5, 6) aufweist, wobei wenigstens zwei Rohrtransportwagen (5, 6) im Gleichlauf verfahren werden.

## Claims

1. A welding stand (3) which is configured for welding a spiral seam (25) of a spiral tube (1), comprising a welding device (2) and comprising a transport device for transporting the spiral tube (1) relative to the welding device, wherein the transport device is configured as a tube transport carriage system (4) comprising at least one tube transport carriage (5, 6), which can be displaced in the longitudinal direction relative to the welding device (2), with the spiral tube (1) arranged on the tube transport carriage system (4) for welding, wherein the tube transport carriage (5, 6) comprises a rotating device (16) with at least one rotating unit (17, 18) for rotating the spiral tube (1) during the displacement in the longitudinal direction, wherein the rotating unit (17, 18) comprises at least one pair of rollers for placement of the spiral tube (1) and wherein at least one roller (23, 24) of the roller pair is driven, **characterised in that** a restoring device is assigned to each roller (23, 24) of the roller pair and that the restoring device can be controlled by means of a control device in such a manner that one roller (23, 23) is automatically withdrawn from its mounting position before contact takes place with the welded spiral seam (25) and that after passing the welded seam (25), the roller (23, 24) is set against the spiral tube (1) again.

2. The welding stand according to claim 1, **characterised in that** an insertion device (13) for the spiral tube (1) and/or an ejection device (20) for the spiral tube (1) is provided on the tube transport carriage (5, 6).

3. The welding stand according to claim 1 or 2, **characterised in that** the rotating device comprises two rotating units (17, 18) for rotating the spiral tube (1) and that preferably the insertion device (18) and/or the ejection device (20) is disposed between the rotating units (17, 18).

4. The welding stand according to any one of the preceding claims, **characterised in that** the roller (23, 24) is adjustable in the longitudinal direction of the spiral tube (1).

5. The welding stand according to claim 1, **characterised in that** the tube transport carriage system (4) comprises two tube transport carriages (5, 6) and that preferably a synchronising device is allocated to the tube transport carriage (5, 6).

6. The welding stand according to any one of the preceding claims, **characterised in that** a control device is allocated to the tube transport carriage system (4), by which means the arrangement of the tube transport carriage or carriages (5, 6) relative to the spiral tube (1) in the longitudinal direction of the spiral tube (1) and/or the mutual spacing of at least two tube transport carriages (5, 6) in the longitudinal direction of the spiral tube (1) can be controlled depending on the tube length of the spiral tube (1) and/or the translational movement of the tube transport carriage system (4) and/or the rotating device (16).

7. A method for welding a spiral tube (1) by means of a welding device (2), preferably in a welding stand (3) according to one of the preceding claims, wherein the spiral tube (1) is moved in a helical line and along the welding device (3) during welding, wherein the spiral tube (1) for welding is placed on a tube transport carriage system (4) comprising at least one tube transport carriage (5, 6) and during welding, the tube transport carriage system (4) is displaced together with the spiral tube (1) in the longitudinal direction of the spiral tube (1) relative to the welding device (2) and wherein the rotary movement of the spiral tube (1) is produced by means of a rotating device (16) on the tube transport carriage (5, 6) during the displacement of the tube transport carriage (5, 6), **characterised in that** the rotating device (16) comprises a plurality of roller pairs and that individual rollers (23, 24) are automatically set against the spiral tube (1) and withdrawn so that no contact of a roller (23, 24) with the welded spiral seam (25) occurs.

8. The method according to claim 7, **characterised in that** the speed of travel of the tube transport carriage system (4) and the rotational speed of the rotating device (16) are synchronised in such a manner that during welding the spiral of the welded joint (11) of the spiral tube (1) is moved at preferably constant speed in the welding position relative to a welding head (8, 10) of the welding device (2).

9. The method according to any one of the preceding claims 7 or 8, **characterised in that** the tube transport carriage (5, 6) is displaced without transverse relative movement between the tube transport carriage (5, 6) and the spiral tube (1).

10. The method according to any one of the preceding claims 7 to 9, **characterised in that** the tube transport carriage system (4) comprises a plurality of tube transport carriages (5, 6), wherein at least two tube transport carriages (5, 6) are displaced in a synchronised manner.

## Revendications

1. Poste de soudure (3) formé pour la soudure d'un soudage hélicoïdal (25) d'un tuyau hélicoïdal (1), avec un dispositif de soudure (2) et un dispositif de transport pour le transport d'un tuyau hélicoïdal (1) par rapport au dispositif de soudure, le dispositif de transport étant conçu comme un système de chariot de transport de tuyau (4), avec au moins un chariot de transport de tuyau (5, 6), qui peut être déplacé pour la soudure, dans le sens longitudinal par rapport au dispositif de soudure (2), avec le tuyau hélicoïdal (1) reposant sur le système de chariot de transport de tuyau (4), le chariot de transport de tuyau (5, 6) comportant un dispositif rotatif (16) avec au moins une unité rotative (17, 18) pour la rotation du tuyau hélicoïdal (1) pendant le procédé dans le sens longitudinal, l'unité rotative (17, 18) comportant au moins une paire de rouleaux pour l'appui du tuyau hélicoïdal (1), et au moins l'une des rouleaux (23, 24) de la paire de rouleaux étant entraîné, **caractérisé en ce qu'**un dispositif de rappel est attribué à chacun des rouleaux (23, 24) de la paire de rouleaux et **en ce que** le dispositif de rappel peut être commandé au moyen d'un dispositif de commande, de façon à ce qu'un rouleau (23, 24) est automatiquement ramené en arrière depuis sa position d'appui, avant d'entrer en contact avec la soudure hélicoïdale soudée (25), et **en ce que** la rouleau (23, 24) est à nouveau approché du tuyau hélicoïdal (1) après le passage de la soudure hélicoïdale soudée (25).

2. Poste de soudure selon la revendication 1, **caractérisé en ce qu'**un dispositif d'insertion (13) pour le tuyau hélicoïdal (1) et/ou un dispositif d'éjection (20) pour le tuyau hélicoïdal (1) est prévu sur le chariot de transport de tuyau (5, 6).

3. Poste de soudure selon la revendication 1 ou 2, **caractérisé en ce que** le dispositif rotatif comporte deux unités rotatives (17, 18) pour la rotation du tuyau hélicoïdal (1), et **en ce que** le dispositif d'insertion (18) et/ou le dispositif d'éjection (20) est de préférence disposé entre les unités rotatives (17, 18).

4. Poste de soudure selon l'une des revendications précédentes, **caractérisé en ce que** le rouleau (23, 24) peut être réglé dans le sens longitudinal du tuyau hélicoïdal (1).

5. Poste de soudure selon la revendication 1, **caractérisé en ce que** le système de chariot de transport de tuyau (4) comporte deux chariots de transport de tuyau (5, 6), et **en ce qu'**un dispositif de synchronisation est de préférence attribué au chariot de transport de tuyau (5, 6).

6. Poste de soudure selon l'une des revendication précédentes, **caractérisé en ce qu'**un dispositif de commande est attribué au système de chariot de transport de tuyau (4), permettant de commander la disposition du ou des chariots de transport de tuyau (5, 6) par rapport au tuyau hélicoïdal (1) dans le sens longitudinal du tuyau hélicoïdal (1) et/ou de commander l'écart réciproque d'au moins deux chariots de transport de tuyau (5, 6) dans le sens longitudinal du tuyau hélicoïdal (1), en fonction de la longueur de tuyau du tuyau hélicoïdal (1), et/ou de commander le mouvement de translation du système de chariot de transport de tuyau (4) et/ou le dispositif rotatif (16).

7. Procédé de soudure pour la soudure d'un tuyau hélicoïdal (1), au moyen d'un dispositif de soudure (2), de préférence dans un poste de soudure (3) selon l'une des revendications précédentes, le tuyau hélicoïdal (1) étant déplacé en forme de ligne de vis et le long du dispositif de soudure (3) pendant la soudure, le tuyau hélicoïdal (1) étant pour la soudure appuyé sur un système de chariot de transport de tuyau (4) avec au moins un chariot de transport de tuyau (5, 6), et le système de chariot de transport de tuyau (4) étant déplacé pour la soudure ensemble avec le tuyau hélicoïdal (1) dans le sens longitudinal du tuyau hélicoïdal (1) par rapport au dispositif de soudure (2), et le mouvement de rotation du tuyau hélicoïdal (1) étant produit par un dispositif rotatif (16) sur le chariot de transport de tuyau (5, 6) pendant le procédé du chariot de transport de tuyau (5, 6), **caractérisé en ce que** le dispositif rotatif (16) comporte une multitude de paires de rouleaux et **en ce que** certains rouleaux (23, 24) sont automatiquement appliqué à et retirés du tuyau hélicoïdal (1), afin d'éviter que le rouleau (23, 24) n'entre en contact avec la soudure hélicoïdale soudée (25).

8. Procédé selon la revendication 7, **caractérisé en ce que** la vitesse de déplacement du système de chariot de transport de tuyau (4) et la vitesse de rotation du dispositif rotatif (16) sont synchronisés de telle manière que lors de la soudure, la spirale du joint de soudure (11) du tuyau hélicoïdal (1) est déplacée à une vitesse de préférence constante en position de soudure par rapport à la tête de soudure (8, 10) du dispositif de soudure (2).

9. Procédé selon l'une des revendications 7 à 8, **caractérisé en ce que** le chariot de transport de tuyau (5, 6) est déplacé sans mouvement relatif transversal entre le chariot de transport de tuyau (5, 6) et le tuyau hélicoïdal (1).

10. Procédé selon l'une des revendications 7 à 9, **caractérisé en ce que** le système de chariot de transport de tuyau (4) comporte une multitude de chariot de transport de tuyau (5, 6), parmi lesquels au moins chariot de transport de tuyau (5, 6) sont déplacés de manière synchrone.
